# EUROPÄISCHE PATENTSCHRIFT

(11) **EP 0 736 353 B1**
(45) Veröffentlichungstag und Bekanntmachung des Hinweises auf die Patenterteilung: **07.03.2001**
(21) Anmeldenummer: 96105030.9
(22) Anmeldetag: 29.03.1996
(51) Int. Cl.: B23D 51/02

(54) **Stichsäge**
Hacksaw
Scie sauteuse

(30) Priorität: 07.04.1995 DE 19513076
(43) Veröffentlichungstag der Anmeldung: 09.10.1996
(73) Patentinhaber: SCINTILLA AG, CH-4501 Solothurn (CH)
(72) Erfinder: Odendahl, Alfred, Dr.-Ing., 71111 Waldenbuch (DE); Di Nicolantonio, Aldo, Dipl.-Masch.-Ing. ETH, 4565 Recherswil (CH); Ruepp, Urs, Dipl.-Masch.-Ing. HTL, 4500 Solothurn (CH)
(74) Vertreter: Friedmann, Jürgen, Dr.-Ing.

(56) Entgegenhaltungen:
- EP-A- 0 521 263
- DE-A- 3 540 507
- DE-A- 4 104 296
- US-A- 1 940 483
- US-A- 4 213 242

## Beschreibung

### Stand der Technik

Die Erfindung geht aus von einer Stichsäge nach der Gattung des Anspruchs 1.

Durch die US 1 940 483 ist eine wie eine Stichsäge arbeitende Textilschneidemaschine bekannt, deren hin- und hergehendes Messer mit seinem Rücken in einer gleitschienenartigen Führung abgestützt ist. Die Führung ist zwischen dem Gehäuse der Textilschneidemaschine und deren Grundplatte angeordnet. Ebenso wie das Schneidmesser ragt auch die gleitschienenartige Führung nicht unter der Grundfläche der Grundplatte hervor.

Durch die DE-OS 41 04 296 ist eine gattungsgemäße Stichsäge bekannt. Diese trägt unter ihrer Grundplatte ein als Zunge bezeichnetes zum Sägeblatt fluchtend gehäusefest angeordnetes Schwert. Dieses Schwert dient zur Aufnahme einer entlang dem Schwert verschiebbaren zweiten Grundplatte, die zur ersten parallel ausgerichtet ist. Die Grundplatte ist am Schwert festklemmbar. Dieses Schwert dient in erster Linie als Träger für die zweite Grundplatte und bildet gemeinsam mit der zweiten Grundplatte ein verhältnismäßig hohes Zusatzgewicht für die Stichsäge. Außerdem ist für Arbeiten, bei denen das Schwert und die zweite Grundplatte unerwünscht sind, der Montageaufwand zum Entfernen dieser Teile hoch.

Die Geräte nach dem Stand der Technik haben für ihre Zwecke Vorteile. Die Textilschneidemaschine hat den Nachteil, daß das Schwert nur zur Führung von Stichsägeblättern oberhalb der Grundplatte geeignet ist. Die bekannte Stichsäge hat den Nachteil, daß entweder das vorhandene Schwert ständig beim Sägen benutzt werden muß oder daß eine umständliche, zeitraubende Demontage des Schwerts inkaufgenommen werden muß für die Fälle, bei denen ein Sägen ohne Schwert vorteilhafter ist.

Nachteil der bisherigen Stichsägen ist die starre Anordnung des Schwerts, so daß bei Pendelstichsägen der Sägeblattrükken nur zeitweilig abstützbar bzw. insbesondere dann nicht abgestützt ist, wenn beim Pendelhub das Sägeblatt in Vorschubrichtung schwenkt. Dabei entfernt sich der Sägeblattrücken vom Schwert gerade dann, wenn ein Stabilisieren des Sägeblatts beim Eingriff in das Werkstück am wirksamsten bzw. am nötigsten wäre.

Die Arbeitsergebnisse mit den bekannten Stichsägen mit Führungsschwert sind nur geringfügig besser als mit Stichsägen ohne Führungsschwert.

### Vorteile der Erfindung

Die erfindungsgemäße Stichsäge mit den kennzeichnenden Merkmalen des Anspruchs 1 hat demgegenüber den Vorteil, daß bedarfsweise für Arbeiten ohne oder mit Schwert dieses nach hinten oder vorn klappbar ist.

Ein weiterer Vorteil der erfindungsgemäßen Stichsäge ist, daß das Schwert elastisch an den Sägeblattrücken angedrückt wird und dabei ständig der Pendelhubbewegung des Sägeblattes folgt.

Bei einer vorteilhaften Ausführungsform der Erfindung ist es außerdem möglich, das Schwert axial zu verstellen. Dabei ergibt sich eine stabilisierende Dreibeinauflage gemeinsam mit der Vorderkante der Grundplatte, so daß Tauchsägeschnitte mit der erfindungsgemäßen Stichsäge besonders sicher durchführbar sind.

Die ständige Abstützung des Sägeblatts beim Pendelhub bewirkt ein deutlich besseres Arbeitsergebnis als mit den bisher bekannten Stichsägen.

Weitere vorteilhafte Ausgestaltungen der Erfindung ergeben sich aus den abhängigen Ansprüchen.

### Zeichnung

Ausführungsbeispiele der Erfindung sind in der nachfolgenden Beschreibung anhand der zugehörigen Zeichnung näher erläutert.

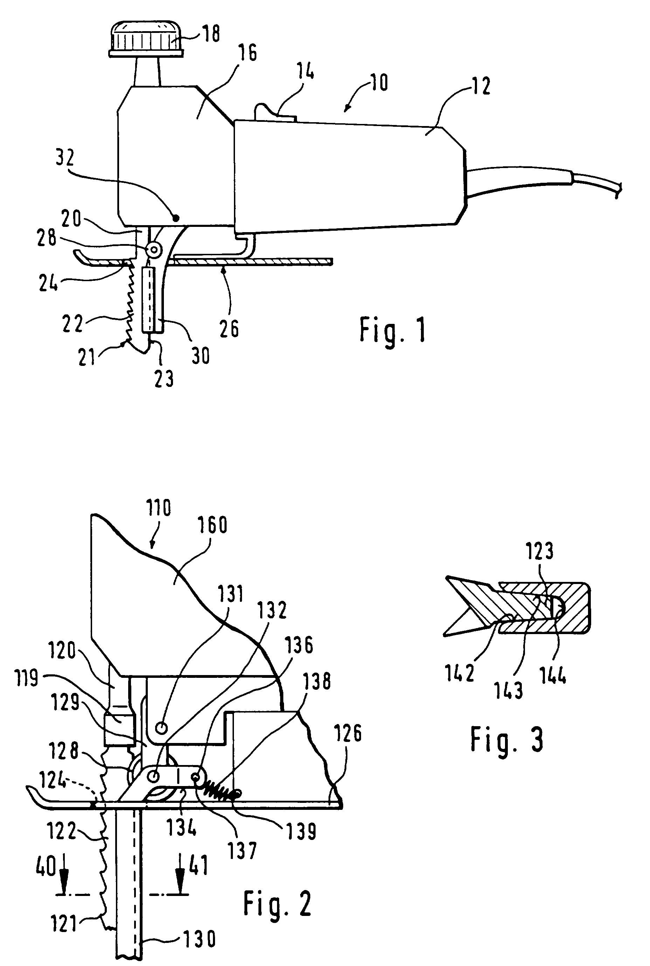

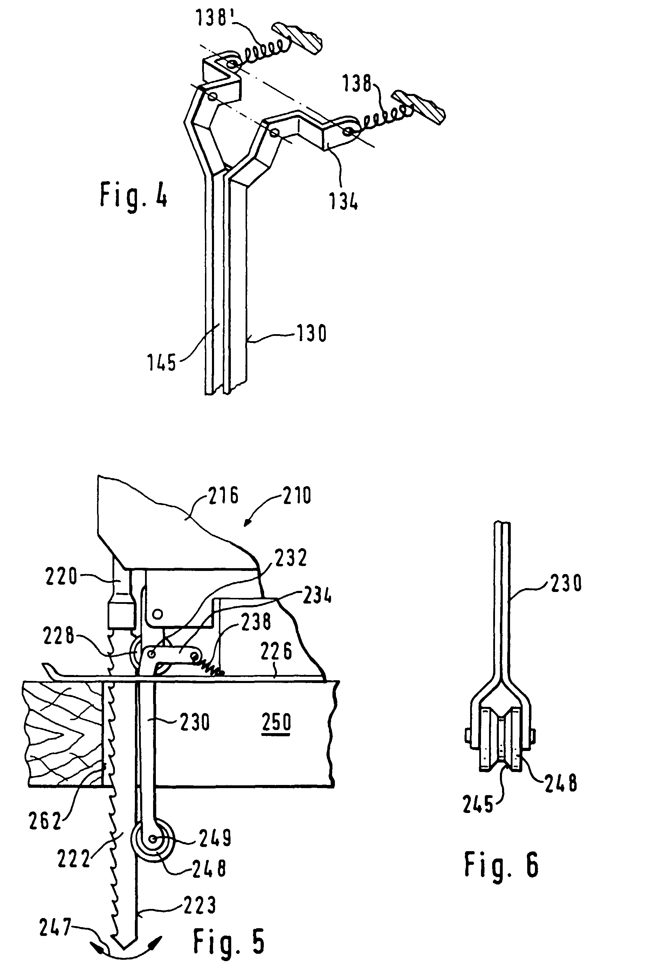

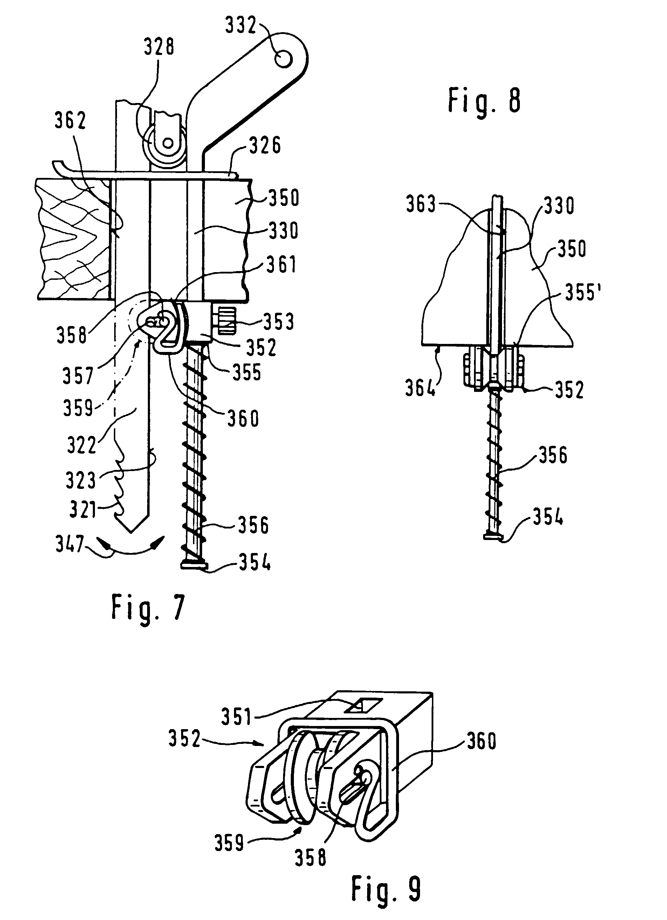

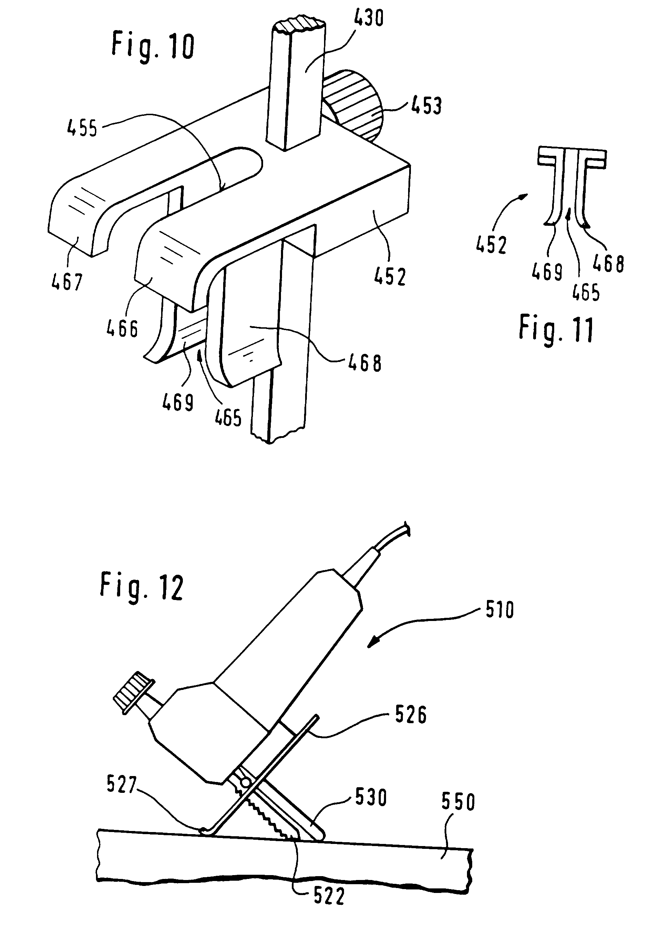

Es zeigen Figur 1 eine Seitenansicht eines Ausführungsbeispiels der erfindungsgemäßen Stichsäge, Figur 2 die Einzelheit des Sägeblatts mit Führungschwert, Figur 3 eine Schnittdarstellung durch das Sägeblatt mit Schwert gemäß Figur 2, Figur 4 eine räumliche Darstellung eines Führungsschwerts gemäß Figur 2 und 3, Figur 5 eine Seitenansicht eines weiteren Ausführungsbeispiels eines Sägeblatts mit Rückenabstützung, Figur 6 eine Ansicht des Schwerts gemäß Figur 5 von hinten, Figur 7 ein weiteres Ausführungsbeispiel eines Schwerts mit Rollenführung, Figur 8 die Ansicht von Figur 7 von hinten beim Eintritt des Sägeblatts in ein Werkstück, Figur 9 die Ansicht einer der Rollen am Schwert gemäß Figur 7 bzw. 8, Figur 10 eine räumliche, vergrößerte Darstellung eines Gleitführungsstücks, Figur 11 eine Schnittansicht des Gleitführungsstücks und Figur 12 eine erfindungsgemäße Stichsäge beim Tauchsägen.

### Beschreibung der Ausführungsbeispiele

In Figur 1 ist eine erfindungsgemäße Stichsäge 10 gezeigt mit einem Motorgehäuse 12, das einen Ein- und Ausschalter 14 trägt. An das Motorgehäuse 12 ist ein Getriebegehäuse 16 angeflanscht. Das Motorgehäuse 12 dient als Haupthandgriff, während ein knopfartiger Zusatzhandgriff 18 auf der oberen Stirnseite des Getriebegehäuses 16 angeordnet ist. Aus der unteren Stirnseite des Getriebegehäuses 16 tritt vertikal nach unten eine Hubstange 20, an der lösbar ein Sägeblatt 22 festgespannt ist. Das Sägeblatt 22 mit einer Zahnreihe 21 und einem Rücken 23 tritt axial nach unten durch einen Schlitz 24 einer Grundplatte 26. Die Grundplatte 26 dient zum gleitkufenartigen Führen der Stichsäge 10 über ein nicht dargestelltes Werkstück. Der Sägeblattrücken 23 stützt sich oberhalb der Grundplatte 26 nahe dem Ende der Hubstange 20 an einer Führungsrolle 28 ab. Außerdem stützt sich der Sägeblattrücken 23 unterhalb der Grundplatte 26 gegen ein Führungsschwert 30, das den Sägeblattrücken 23 U-Profilartig großflächig umgreift.

Das Führungsschwert 30 ist in nicht dargestellten Gelenkmitteln schwenkbar am Getriebegehäuse 16 angeordnet, und wird dabei von nicht dargestellten federelastischen Mitteln gehalten, so daß es sich ständig mit einer gewissen Vorspannkraft am Sägeblattrücken 23 abstützt.

In Figur 2 zeigt eine Seitenansicht ein weiteres Ausführungsbeispiel einer Stichsäge 110 mit einem Führungsschwert 130 am Getriebegehäuse 160. Das stufenbundartige, freie Ende der Hubstange 120 trägt eine Spanneinrichtung 119 zur Aufnahme des Sägeblatts 122, das in Betrachtungsrichtung auf der linken Seite eine Zahnreihe 121 trägt. Das Sägeblatt 122 ragt durch den Durchtrittsschlitz 124 in der Grundplatte 126, wobei sich der Sägeblattrücken 123 in einer drehbaren Führungsrolle 128 abstützt, die von einem Lagerbock 129 getragen wird.

Der Lagerbock 129 ist über einen Niet 131 mit dem unteren Teil des Getriebegehäuses 160 verbunden. Dabei stützt sich der Lagerbock 129 gegenüber dem Getriebegehäuse 160 federnd so ab, daß sich die Führungsrolle 128 ihrerseits federnd gegen den Sägeblattrücken 123 anlegt.

Das Führungsschwert 130 stützt sich in voller Länge am Sägeblattrücken 123 ab und ist über eine Achse 132 schwenkbar am Lagerbock 129 befestigt, wobei die Achse 132 zugleich die Drehachse für die Führungsrolle 128 bildet. Ein rechtwinklig vom Schwert 130 abgebogener Schwertarm 134 trägt an seinem freien Ende eine Bohrung 136, durch die ein linkes Federende 137 einer Zugfeder 138 greift. Diese greift mit ihrem rechten Federende 139 formschlüssig in eine nicht näher bezeichnete Bohrung des Getriebegehäuses 116.

In Figur 3 ist ein Querschnitt durch das Sägeblatt 122 und das Schwert 130 gemäß Figur 2 entlang den Pfeilen 40, 41 gezeigt, wobei deutlich wird, wie der Sägeblattrücken 123 im Führungsschwert 130 an dessen Nutflanken 142, 143 bzw. am Nutgrund 144 geführt wird und daß sich das Sägeblatt 122 konisch zum Sägeblattrücken 123 hin verjüngt, wobei der Verlauf der Nutflanken 142, 143 der Kontur des Sägeblattrückens 123 folgen.

In Figur 4 ist das Führungsschwert 130 entsprechend der Figur 2 bzw. 3 als Einzelheit dargestellt. Spiegelbildlich zum Schwertarm 134, symmetrisch zur Schwertachse ist ein zweiter Schwertarm 135 angeordnet. Der Schwertarm 135 wird durch eine zweite mit der ersten 138 identische Zugfeder 138' elastisch am Getriebegehäuse 116 festgehalten. Das Schwert 130 ist als Blechprofilteil ausgestaltet, wobei die Führungsnut 145 durch U-profilförmige Ausgestaltung des Blechs gebildet wird.

In Figur 5 ist ein weiteres Ausführungsbeispiel einer Stichsäge 210 gezeigt, das außer der Ausgestaltung des Schwertendes des Führungsschwerts 230 mit Figur 2 übereinstimmt.

Ein Getriebegehäuse 216 trägt eine Hubstange 220, die ein Sägeblatt 222 aufnimmt. Gegen den Sägeblattrücken 223 stützt sich ein Schwert 230 über eine untere Führungsrolle 248 ab. Die Führungsrolle 248 ist mittels einer Achse 249 am Ende des Führungsschwerts 230 drehbar angeordnet. Ein oberer Schwertarm 234, zu dem ein nicht dargestellter, zweiter symmetrischer Schwertarm gehört, ist rechtwinklig vom Schwert 230 abgebogen und wird über eine Feder 238 elastisch am Getriebegehäuse 216 festgehalten, entsprechend dem Ausführungsbeispiel gemäß Figur 2. Der Sägeblattrücken 223 wird in einer Umfangsnut der Führungsrolle 248 in Linienberührung wie durch die obere Führungsrolle 228 geführt und gegen seitliche Auslenkung gesichert. Die Stichsäge 210 sitzt mit ihrer Grundplatte 226 auf einem Werkstück 250 auf. Das Schwert 230 kann einer Pendelbewegung des Sägeblatts 222 in Vorschubrichtung entlang dem Pfeil 247 durch Verschwenken um die Achse 232 folgen.

In Figur 6 ist die Einzelheit des Führungsschwerts 230 mit der unteren Führungsrolle 248 gezeigt. Dabei ist erkennbar, daß die Führungsrolle 248 eine V-förmige Führungsnut 245 zur Abstützung und Führung des Sägeblattrückens 223 trägt.

In Figur 7 ist ein weiteres Ausführungsbeispiel eines Führungsschwerts 330 gemeinsam mit einem Sägeblatt 322 gezeigt, wobei eine Grundplatte 326 und ein Werkstück 350 erkennbar sind.

Das Führungsschwert 330 ist um eine nichtmitdargestellte an der Stichsäge angeordnete Achse 332 oberhalb der Grundplatte 326 wegklappbar, falls auf dessen Abstützfunktion verzichtet werden soll.

Das Führungsschwert 330 trägt stativartig einen gabelförmig ausgestalteten Pendelrollenhalter 352, der längsverschiebbar und über eine Fixierschraube 353 gegenüber dem Führungsschwert 330 fixierbar angeordnet ist. Das Schwert 330 trägt an seinem unteren freien Ende einen Anschlag 354. Zwischen dem Anschlag 354 und der Unterseite 355 des Pendelrollenhalters 352 stützt sich eine Druckfeder 356 ab und sucht den Pendelrollenhalter 352 in Betrachtungsrichtung nach oben zu verschieben. Der Pendelrollenhalter 352 trägt seitlich ein sich in Vorschubrichtung erstreckendes ein Langloch 357, in dem die Achse 358 einer Führungsrolle 359 verschiebbar angeordnet ist. Der Umfang der Führungsrolle 359 ist gestrichelt dargestellt. Die Achse 358 wird umgriffen von einem Ende einer Bügelfeder 360, deren anderes Ende in einen nutartigen Durchbruch 361 des Pendelrollenhalters 352 eingespannt ist. Der Federdraht 360 ist so vorgespannt, daß er die Achse 358 in Richtung des Sägeblattrückens 322 zu halten sucht. Dadurch folgt die Führungsrolle 359 stets der Pendelbewegung des Sägeblatts 322 und bleibt damit immer in engem Führungskontakt zum Sägeblattrücken 323.

Im Werkstück 350 verläuft die Zahnreihe 321 des Sägeblatts 322 entlang der Schnittkante 362. Im dahinter liegenden Schnittkanal folgt dem Sägeblattrücken 323 das Führungsschwert 330. Die obere Führungsrolle 328 führt den Sägeblattrücken 323 oberhalb der Grundplatte 326 beidseitig umgreifend und folgt dessen Pendelbewegung.

In Figur 8 ist eine Darstellung gemäß Figur 7 ohne Sägeblatt in Betrachtungsrichtung von links gezeigt, wobei der Schlitz 363 im Werkstück 350 und das darin geführte Schwert 330 deutlich erkennbar sind. Der Pendelrollenhalter 352 stützt sich mit seiner oberen Stirnseite 355' an der Werkstückunterseite 364 ab, indem er durch die Druckfeder 356 nach oben vorgespannt wird, die zwischen dem Anschlag 354 und der Unterkante 355 des Pendelrollenhalters 352 angeordnet ist

In Figur 9 ist die Einzelheit des Pendelrollenhalters 352 gemäß den Figuren 7 und 8 gezeigt. Hier ist der als Gleitführung dienende Führungsschlitz 351 zum Durchtritt des Schwerts 330 erkennbar, der als Vierkantbohrung ausgestaltet ist. Deutlich erkennbar ist auch die Bügelfeder 360, die die Achse 358 gemeinsam mit der Führungsrolle 359 im Langloch 357 nach vorn zu schieben sucht.

In Figur 10 ist ein Ausführungsbeispiel eines Führungsstücks 452 gezeigt. Dieses ist entsprechend dem Pendelrollenhalter 352 gemäß Figur 7 bis 9 entlang dem Schwert 430 verschiebbar angeordnet. Das Führungsstück 452 umgreift das nicht dargestellte Sägeblatt bzw. den Sägeblattrücken als Gleitstück mit Flächenberührung. Das Führungsstück 452 ist über eine Fixierschraube 453 gegenüber dem Schwert 430 in jeder Verschiebeposition fixierbar. Ein horizontaler, geteilter kufenartiger Bereich 466, 467 des Führungsstücks 452 bildet einen horizontalen Schlitz 455 zum Eintritt des nichtdargestellten Sägeblattrückens, wobei zwei einen vertikalen Schlitz 465 mit trichterartigem Schlitzende bildende, vertikale Lappen 468, 469 zum großflächigen Abstützen und Führen des Sägeblattrückens bzw. auch der Sägeblattflachseiten vorgesehen sind.

Figur 11 zeigt eine verkleinerte Darstellung des Führungsstücks 452 gemäß Figur 10 von vorn betrachtet, wobei die trichterartige Gestalt der sich nach unten öffnenden vertikalen Lappen 468, 469 mit dem vertikalen Schlitz 465 deutlich wird.

In Figur 12 ist eine erfindungsgemäße Stichsäge 510 beim Tauchsägen gezeigt, wobei ein axial federnd verschiebbares Schwert 530 parallel zum Sägeblatt 522 verläuft und als Stützfuß zur Auflage auf ein Werkstück 550 dient. Gemeinsam mit der Vorderkante 527 der Grundplatte 526 bildet das Schwert 530 eine Dreipunktauflage, mit der das Eintauchen des Sägeblatts 522 in das zu sägende Werkstück 550 kontrolliert führbar ist, wobei allerdings das Schwert 530 beim Eintauchen nicht der Pendelbewegung des Sägeblatts folgt.

Entsprechend den Figuren 1 bis 10 stützt entweder das Führungsschwert unmittelbar oder ein auf dieses aufgesetztes Führungsstück den unterhalb der Grundplatte angeordneten Bereich des Sägeblatts ab. Die Durchbiegung des Sägeblatts wird umso besser verhindert, je kleiner der Abstand der zwei Führungen unterhalb und oberhalb der Grundplatte 126 zueinander ist. Die Rollenführungen haben gegenüber Gleitführungen den Vorteil geringeren Verschleisses.

Die Gleitführungen haben den Vorteil einer großflächigen Anlage am Sägeblatt und damit besserer Führungseigenschaften.

## Patentansprüche

1. Stichsäge mit einer Grundplatte (26; 126; 226; 326) und einer Hubstange (20; 120; 220) zur Aufnahme eines Sägeblatts (22; 122; 222; 322; 522) mit einer Zahnseite (21; 121; 221; 321) und mit einem Sägeblattrücken (23; 123; 223; 323), das über die Grundplatte (26; 126; 226; 326) nach unten hinausragt und unterhalb der Grundplatte (26; 126; 226; 326) am Sägeblattrücken (23; 123; 223; 323) abgestützt wird, wobei als Stützmittel ein parallel und fluchtend zum Sägeblatt (22; 122; 222; 322; 522) angeordnetes Führungsschwert (30; 130; 230; 330; 430; 530) dient, dadurch gekennzeichnet, daß das Führungsschwert (30; 130; 230; 430; 530) um eine oberhalb der Grundplatte (26; 126; 226; 326), im wesentlichen parallel zu dieser verlaufende Achse (32; 132; 232; 332) schwenkbar angeordnet ist.

2. Stichsäge nach Anspruch 1, dadurch gekennzeichnet, daß das Führungsschwert (30; 130; 230; 330; 430; 530) pendelbar angeordnet ist und der Pendelbewegung des Sägeblatts (22; 122; 222; 322; 522) folgt.

3. Stichsäge nach Anspruch 1 oder 2, dadurch gekennzeichnet, daß das Führungsschwert (30; 130; 230; 330; 430; 530) sich elastisch, unmittelbar am Sägeblattrücken (23; 123; 223; 323) abstützt und dabei das Sägeblatt (22; 122; 222; 322; 522) beidseitig, zumindest teilweise, umgreift.

4. Stichsäge nach Anspruch 1, dadurch gekennzeichnet, daß das Führungsschwert (30; 130; 330; 230; 430; 530) ein, insbesondere verschiebliches und drehbares, Führungsstück (28, 128, 352, 452) trägt, über das es sich gegen den Sägeblattrücken (23; 123; 223; 323) stützt.

5. Stichsäge nach Anspruch 4, dadurch gekennzeichnet, daß das Führungsstück (352; 452) entlang dem Führungsschwert (330; 430) verschiebbar angeordnet ist.

6. Stichsäge nach Anspruch 5, dadurch gekennzeichnet, daß sich das Führungsstück (352) beim Sägen eines Werkstücks (350) an dessen unterer Seite elastisch abstützt und damit das Werkstück (350) an die Grundplatte (326) zu pressen sucht.

7. Stichsäge nach einem der vorhergehenden Ansprüche, dadurch gekennzeichnet, daß das Führungsstück (352) eine zum Übergreifen des Sägeblattrückens (323) vorgesehene Führungsrolle (358) drehbar, elastisch verschieblich trägt.

8. Stichsäge nach einem der vorhergenden Ansprüche, dadurch gekennzeichnet, daß sich das Führungsstück (452) mit, insbesondere zu Gleitlappen (468; 469) gehörenden, Gleitflächen, vorzugsweise beidseitig, am Sägeblatt abstützt.

9. Stichsäge nach einem der vorhergehenden Ansprüche, dadurch gekennzeichnet, daß das Führungsschwert (30; 130; 230; 330; 430; 530) auf einem Werkstück abgestützt als Stützfuß, insbesondere mit seinem unteren Ende zur Dreipunktauflage, zum Tauchsägen dient.

10. Stichsäge nach einem der vorhergehenden Ansprüche 4-8, dadurch gekennzeichnet, daß das Führungsstück (452), insbesondere mit Gleitlappen (468; 469) zur Führung eines Sägeblattes (22; 122; 222; 322; 522) versehen, einstückig ist und aus Sintermetall besteht.

11. Stichsäge nach Anspruch 9, dadurch gekennzeichnet, daß es eine lösbare Feststelleinrichtung (453) besitzt, mit der es am Führungsschwert (430) axial verschieblich und gegenüber diesem fixierbar anzubringen ist.

12. Stichsäge nach Anspruch 9, dadurch gekennzeichnet, daß die Schnittbreite des Sägeblatts (122) breiter ist als die Breite des u-förmig den Sägeblattrücken (123) einfassenden Schwertes (130).

## Claims

1. Jigsaw having a sole plate (26; 126; 226; 326) and a stroke rod (20; 120; 220) for accommodating a saw blade (22; 122; 222; 322; 522) with a toothed side (21; 121; 221; 321) and a saw-blade back (23; 123; 223; 323), the saw blade (22; 122; 222; 322; 522) projecting downwards beyond the sole plate (26; 126; 226; 326) and being supported below the sole plate (26; 126; 226; 326) on the saw-blade back (23; 123; 223; 323), a guide tongue (30; 130; 230; 330; 430; 530) arranged in parallel with and in alignment with the saw blade (22; 122; 222; 322; 522) serving as supporting means, characterized in that the guide tongue (30; 130; 230; 330; 430; 530) is arranged so as to be pivotable about a spindle (32; 132; 232; 332) running above the sole plate (26; 126; 226; 326) and essentially parallel to the latter.

2. Jigsaw according to Claim 1, characterized in that the guide tongue (30; 130; 230; 330; 430; 530) is arranged in a pendulous manner and follows the pendulum movement of the saw blade (22; 122; 222; 322; 522).

3. Jigsaw according to Claim 1 or 2, characterized in that the guide tongue (30; 130; 230; 330; 430; 530) is elastically supported directly on the saw-blade back (23; 123; 223; 323) and in the process at least partly (23; 123; 223; 323) and in the process at least partly encloses the saw blade (22; 122; 222; 322; 522) on both sides.

4. Jigsaw according to Claim 1, characterized in that the guide tongue (30; 130; 330; 230; 430; 530) carries a guide piece (28, 128, 352, 452), in particular a displaceable and rotatable guide piece, via which it is supported against the saw-blade back (23; 123; 223; 323).

5. Jigsaw according to Claim 4, characterized in that the guide piece (352; 452) is arranged so as to be displaceable along the guide tongue (330; 430).

6. Jigsaw according to Claim 5, characterized in that the guide piece (352), during the sawing of a workpiece (350), is elastically supported on its underside and thus attempts to press the workpiece (350) against the sole plate (326) .

7. Jigsaw according to one of the preceding claims, characterized in that the guide piece (352) carries a guide roller (358) in a rotatable and elastically displaceable manner, the guide roller (358) being provided for overlapping the saw-blade back (323).

8. Jigsaw according to one of the preceding claims, characterized in that the guide piece (452) is supported on the saw blade, preferably on both sides, with sliding surfaces, in particular belonging to sliding lobes (468; 469).

9. Jigsaw according to one of the preceding claims, characterized in that the guide tongue (30; 130; 230; 330; 430; 530), supported on a workpiece, serves as a supporting foot, in particular with its bottom end for three-point contact, for plunge-cut sawing.

10. Jigsaw according to one of the preceding Claims 4 to 8, characterized in that the guide piece (452), in particular with sliding lobes (468; 469), is provided for guiding a saw blade (22; 122; 222; 322; 522), is in one piece and is made of sintered metal.

11. Jigsaw according to Claim 9, characterized in that the guide piece (452) has a releasable locking device (453), with which it can be attached to the guide tongue (430) in such a way that it is axially displaceable and can be fixed relative to the latter.

12. Jigsaw according to Claim 9, characterized in that the cutting width of the saw blade (122) is wider than the width of the tongue (130) enclosing the saw-blade back (123) in a U-shape.

## Revendications

1. Scie sauteuse comportant une plaque de base (26, 126, 226, 326) et une tige d'entraînement (20, 120, 220) pour recevoir une lame de scie (22, 122, 222, 322, 522) ayant un bord denté (21, 121, 221, 321) et un dos (23, 123, 223, 323), cette lame dépassant en dessous de la plaque de base (26, 126, 226, 326) est soutenue par son dos (23, 123, 223, 323) sous la plaque de base (26, 126, 226, 326), avec comme moyen d'appui un guide (30, 130, 230, 330, 430, 530) parallèle et aligné par rapport à la lame de scie (22, 122, 222, 322, 522),
caractérisée en ce que
le guide (30, 130, 230, 430, 530) est monté pivotant autour d'un axe (32, 132, 232, 332) situé au dessus de la plaque de base (26, 126, 226, 326) et essentiellement parallèle à cette plaque.

2. Scie sauteuse selon la revendication 1,
caractérisée en ce que
le guide (30, 130, 230, 330, 430, 530) est monté selon un montage pendulaire et il suit le mouvement pendulaire de la lame de scie (22, 122, 222, 322, 522).

3. Scie sauteuse selon l'une quelconque des revendications 1 ou 2,
caractérisée en ce que
le guide (30, 130, 230, 330, 430, 530) s'appuie élastiquement directement contre le dos (23, 123, 223, 323) de la lame de scie et entoure au moins partiellement les deux faces de la lame de scie (22, 122, 222, 322, 522).

4. Scie sauteuse selon la revendication 1,
caractérisée en ce que
le guide (30, 130, 330, 230, 430, 530) porte une pièce de guidage (28, 128, 352, 452), en particulier coulissante et pivotante, par laquelle le guide s'appuie contre le dos (23, 123, 223, 323) de la lame de scie.

5. Scie sauteuse selon la revendication 4,
caractérisée en ce que
la pièce de guidage (352, 452) est coulissante le long du guide (330, 430).

6. Scie sauteuse selon la revendication 5,
caractérisée en ce que
pendant le sciage d'une pièce (350), la pièce (352) s'appuie élastiquement contre la face inférieure de cette pièce et cherche ainsi à presser cette pièce (350) contre la plaque de base (326).

7. Scie sauteuse selon l'une quelconque des revendications précédentes,
caractérisée en ce que
la pièce de guidage (352) porte en rotation, de manière coulissante élastiquement, un galet de guidage (358) pour chevaucher le dos (323) de la lame de scie.

8. Scie sauteuse selon l'une quelconque des revendications précédentes,
caractérisée en ce que
la pièce de guidage (452) s'appuie contre les deux faces de la lame de scie en particulier par des surfaces de glissement appartenant à des pattes de glissement (468, 469).

9. Scie sauteuse selon l'une quelconque des revendications précédentes,
caractérisée en ce que
le guide (30, 130, 230, 330, 430, 530) s'appuie sur la pièce à travailler comme un pied d'appui, notamment par son extrémité inférieure servant d'appui en trois points pour scier en plongée.

10. Scie sauteuse selon l'une quelconque des revendications 4 à 8,
caractérisée en ce que
la pièce de guidage (452) est munie notamment de pattes de glissement (468, 469) pour guider une lame de scie (22, 122, 222, 322, 522), ces pattes faisant corps et l'ensemble étant en métal fritté.

11. Scie sauteuse selon la revendication 9,
caractérisée en ce qu'
elle comporte une installation de blocage (453), desserable, pour être installée sur le guide (430), de manière coulissante axialement et être bloquée par rapport à celui-ci.

12. Scie sauteuse selon la revendication 9,
caractérisée en ce que
la largeur de coupe de la lame de scie est supérieure à la largeur du guide (130) en forme de U qui chevauche le dos (123) de la lame de scie.
